# FASCICULE DE BREVET EUROPEEN

(11) **EP 0 714 792 B1**
(45) Date de publication et mention de la délivrance du brevet: **09.09.1998**
(21) Numéro de dépôt: 95116633.9
(22) Date de dépôt: 21.10.1995
(51) Int. Cl.: B60B 21/06, B60B 1/04

(54) **Jante de vélo et roue comprenant une telle jante**
Fahrradfelge und Rad mit derartiger Felge
Cycle rim and wheel provided with such a rim

(30) Priorité: 30.11.1994 FR 9414572
(43) Date de publication de la demande: 05.06.1996
(73) Titulaire: MAVIC S.A., 01990 Saint-Trivier sur Moignans (FR)
(72) Inventeur: Mercat, Jean-Pierre, F-01990 Chaneins (FR); Minville, Alban, F-71570 Romaneche Thorins (FR)
(74) Mandataire: Lejeune, Benoit

(56) Documents cités:
- EP-A- 0 579 525
- WO-A-93/09963
- DE-A- 4 143 380
- DE-C- 4 127 500
- FR-A- 766 678

## Description

L'invention concerne une jante de roue pour cycle et également une roue de cycle comprenant une telle jante, selon les caractéristiques des préambules des revendications indépendantes 1 et 10. Une telle jante est connue par exemple du document EP-A-0 579 525.

Plus exactement, l'invention concerne une jante et une roue prévues pour recevoir un pneu, et, en principe une chambre à air à l'intérieur du pneu. L'invention ne concerne pas les jantes prévues pour recevoir un boyau, c'est-à-dire les jantes formées à partir d'un tube cintré dans le sens de la longueur et dans la section.

Les jantes destinées à recevoir un pneumatique présentent de façon connue une forme de révolution autour d'un axe. Elles présentent en section deux ailes latérales espacées qui forment les flancs latéraux de la jante. Les ailes sont réunies dans leur partie inférieure par un pont inférieur, dans leur partie médiane par un pont supérieur. Les deux ponts et la partie basse des ailes forment une sorte de caisson. Les ponts du caisson sont percés d'une pluralité d'orifices pour le passage des rayons de la roue. Eventuellement, les orifices sont équipés d'oeillets assemblés par sertissage, qui améliorent la liaison entre les rayons et la jante.

Le caisson contribue à la rigidité de la jante en flexion et en torsion et détermine la rigidité et la résistance frontale de la roue, et sa rigidité et sa résistance latérale.

Au-delà du pont supérieur, les ailes se prolongent, de façon à former avec la surface supérieure du pont supérieur une cavité annulaire prévue pour recevoir le pneu et, le plus souvent, une chambre à air. De préférence, le sommet des ailes présente un bourrelet contre lequel le pneu s'appuie, ce qui améliore son maintien dans la rainure.

Les jantes actuellement commercialisées sont généralement fabriquées à partie d'une barre profilée en alliage d'aluminium qui est cintrée et dont les deux extrémités sont assemblées bout à bout, par soudure ou emboutissage d'un manchon de liaison, ou tout autre moyen approprié.

Les caractéristiques physiques principales d'une jante sont le poids, et ses moments d'inerte de la jante par rapport à l'axe neutre passant par son centre et perpendiculaire à la direction d'une déformation frontale et l'axe passant par son centre et perpendiculaire à la direction d'une déformation latérale. Ces caractéristiques physiques sont liées au matériau utilisé et aux dimensions de la jante.

Les dimensions de la jante sont relativement figées. En effet, les dimensions de la cavité supérieure sont déterminées d'après les dimensions usuelles des pneumatiques. Les dimensions des parois du caisson sont quant à elles déterminées d'après les caractéristiques physiques que l'on souhaite obtenir. Elles prennent aussi en compte les contraintes générées par la tension des rayons. Une autre contrainte dont il est tenu compte est l'extrusion de la barre profilée et l'assemblage de ses deux extrémités après cintrage. En effet, il est connu que l'extrusion de profilé à paroi mince est délicate, et ne peut être opéré qu'à vitesse lente, ce qui est peu compatible avec le souci permanent de productivité. Pour une technique d'assemblage par soudure, notamment soudure par étincelage, il est difficile de réaliser une soudure correcte sur une paroi extrêmement fine.

En ce qui concerne la rainure annulaire où est logé le pneu, on sait que le pneu, du fait de son gonflage, exerce sur la partie supérieure des ailes une contrainte relativement forte vers l'extérieur. Les ailes sont de ce fait largement dimensionnées en épaisseur.

Pour ces différentes raisons, on a tendance actuellement à utiliser des barres profilées d'épaisseur relativement forte et relativement uniforme, avec un pont inférieur renforcé pour assurer une bonne tenue des rayons et une bonne liaison mécanique entre les rayons et la jante.

Le problème posé par l'invention est d'améliorer les caractéristiques physiques des jantes existantes, ou tout au moins une partie d'entre elles.

Ce problème est résolu par la jante selon l'invention qui est caractérisée par le fait qu'elle présente en section une forme globale rectangulaire, et que le pont inférieur présente au moins sur la plus grande partie de sa largeur une épaisseur inférieure à 0,7 millimètres.

On a en effet trouvé qu'en donnant à la jante une forme globale rectangulaire, il était possible d'obtenir des caractéristiques améliorées de résistance à la torsion et à la flexion. En outre, en diminuant l'épaisseur du pont inférieur, il était possible de diminuer le volume de matière, et donc le poids et l'inerte cinétique de la jante sans préjudice pour la résistance de la jante.

Selon une caractéristique secondaire, la forme finale de la jante en section est obtenue à partie d'une jante présentant une paroi d'épaisseur plus épaisse que l'on a usiné de façon à diminuer localement l'épaisseur de la paroi. Ainsi, l'extrusion de la barre profilée et l'assemblage de ses deux extrémités après cintrage ne posent pas de difficulté particulière étant donné que ces opérations sont réalisées avec un profilé d'épaisseur plus importante.

L'invention sera mieux comprise en se référant à la description ci-dessous et aux dessins en annexe qui en font partie intégrante.

La figure 1 est une vue de face d'une jante.

La figure 2 est une vue de côté de la jante de la figure 1.

La figure 3 est une vue en section d'une jante selon une première mise en oeuvre de l'invention.

La figure 4 représente une variante de réalisation.

La figure 5 représente la jante de la figure 4 en section au niveau d'un oeillet.

La figure 6 représente en section la jante de la figure 4 à l'état brut.

La figure 7 illustre un des modes de réalisation de la jante selon l'invention.

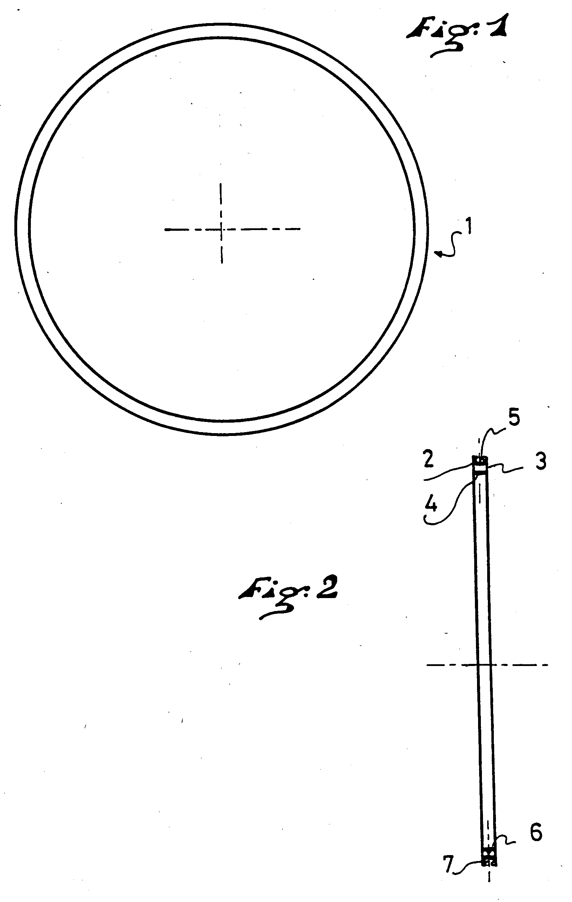

La figure 1 représente de façon schématique une jante 1 sous la forme d'un anneau de grand diamètre. De façon connue, l'anneau 1 est formé à partir d'un segment de profilé en alliage d'aluminium ou autre qui est cintré, dont les deux extrémités sont ensuite assemblées bout à bout par tout moyen approprié, notamment par soudure ou pose d'un manchon de liaison.

En section, le profilé de la jante 1 présente de façon connue deux ailes latérales 2 et 3 . Les ailes sont réunies à leur base par un pont inférieur 4. Elles sont également reliées dans leur partie médiane par un pont supérieur 5. La partie inférieure des ailes 2 et 3 forme avec les ponts 4 et 5 un caisson 6 qui constitue un composant important de la rigidité de la jante en flexion et en torsion.

De façon connue, les deux ponts de la jante sont percés d'une pluralité d'orifices destinés à recevoir les écrous de rayon. De préférence, ces orifices sont pourvus d'oeillets qui sont solidarisés à la jante. Ceci sera décrit plus en détail ultérieurement.

De façon connue également, les rayons sont prévus pour relier la jante à un moyeu, de façon à former une roue.

Les ailes 2 et 3 de la jante se prolongent au-delà du pont supérieur 5 et forment avec ce pont une rainure annulaire 7 dont la section a une forme de "U". Cette rainure se trouve située sur l'extérieur du caisson 6. Elle est prévue pour recevoir le pneu et, le cas échéant la chambre à air. De préférence, les ailes présentent dans leur partie supérieure et vers l'intérieur un bourrelet 8, 9 qui améliore la retenue des flancs latéraux du pneu dans la jante.

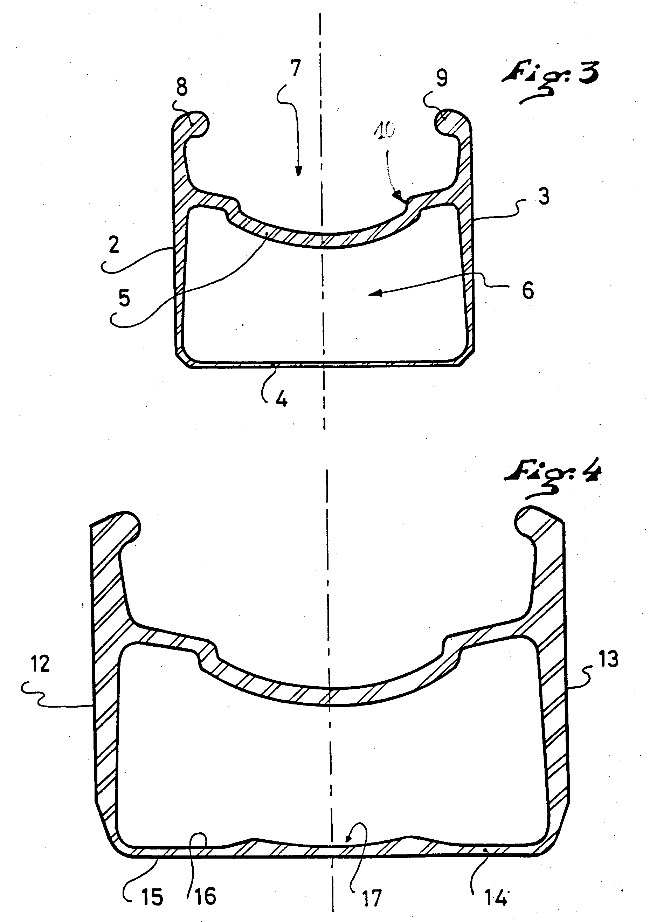

La figure 3 représente une section de la jante selon un premier mode de mise en oeuvre de l'invention. La jante représentée présente une section de forme globalement rectangulaire. Notamment, le pont inférieur 4 est globalement plat en section transversale et orthogonal aux deux ailes latérales 2 et 3. La jante présente donc un pont inférieur cylindrique de révolution.

Le pont inférieur 4 présente une faible épaisseur par rapport au reste de la jante. Cette épaisseur est inférieure à 0,7 millimètres. Elle peut être par exemple de l'ordre de 0,5 millimètres.

Les ailes 2 et 3 présentent une épaisseur croissante depuis leur jonction avec le pont inférieur. A leur jonction avec le pont inférieur, les ailes présentent sensiblement la même épaisseur que le pont lui-même.

De préférence, l'épaisseur des ailes est maximale à la jonction avec le pont supérieur. Au-delà, l'épaisseur des ailes décroît jusqu'aux bourrelets 7 et 8.

Le pont supérieur 5 présente une épaisseur supérieure à celle du pont inférieur 4. Dans le mode de réalisation illustré, le pont supérieur présente dans sa partie centrale une ondulation 10, qui forme une cuvette annulaire. Cette cuvette est prévue pour recevoir les oeillets. Ceci sera décrit plus en détail ultérieurement.

La forme rectangulaire que la jante présente en section donne de très bonnes caractéristiques de rigidité en torsion et en flexion. Au niveau de la section, les ailes sont sollicitées à l'écartement. Le pneu, par son gonflage, a en effet tendance à se dilater vers l'extérieur. Ces efforts s'exercent au niveau de la partie supérieure des ailes. Le pont supérieur travaille principalement en traction, en effet, il retient les ailes à l'écartement. Le pont inférieur travaille par contre en compression. Il empêche en effet la partie supérieure des ailes de s'écarter en prenant appui sur le pont supérieur.

Le pont inférieur est sensiblement orthogonal aux ailes. En outre, il est relativement éloigné. Pour ces raisons, il est possible de mettre en oeuvre un pont inférieur d'épaisseur faible. En effet, même avec une épaisseur faible, le pont inférieur oppose une résistance suffisante aux contraintes auxquelles il est soumis, qui sont pour l'essentiel des contraintes de compression. L'épaisseur des ailes est maximum au niveau de la jonction avec le pont supérieur. C'est en effet dans cette zone des ailes que les contraintes internes sont les plus fortes.

Cette forme générale de la section de la jante amène un gain de masse, donc de poids et d'inertie cinétique tout en conservant de bonnes caractéristiques de rigidité de la jante.

Il faut noter que la jante ci-dessus est particulièrement bien adaptée aux roues équipées de pneus. Elle n'est pas prévue pour les jantes à boyaux pour qui le problème ne se pose pas de la même façon. En effet, les contraintes développées sur la jante par le gonflage du boyau sont très faibles puisque le boyau est un volume refermé sur lui-même.

Dans le mode de réalisation illustré en figure 3, la jante présente en section une hauteur de l'ordre de 17,5 millimètres, et une largeur de l'ordre de 20,5 millimètres. Le caisson 6 présente une hauteur de l'ordre de 9,5 millimètres. L'épaisseur du pont inférieur est constante, et de l'ordre de 0,5 millimètres. A la jonction avec le pont supérieur, les ailes présentent une épaisseur un peu supérieure à 1 millimètre. Le pont supérieur présente une épaisseur sensiblement constante de l'ordre de 1 millimètre. Naturellement, ces valeurs ne sont pas limitatives pour l'invention.

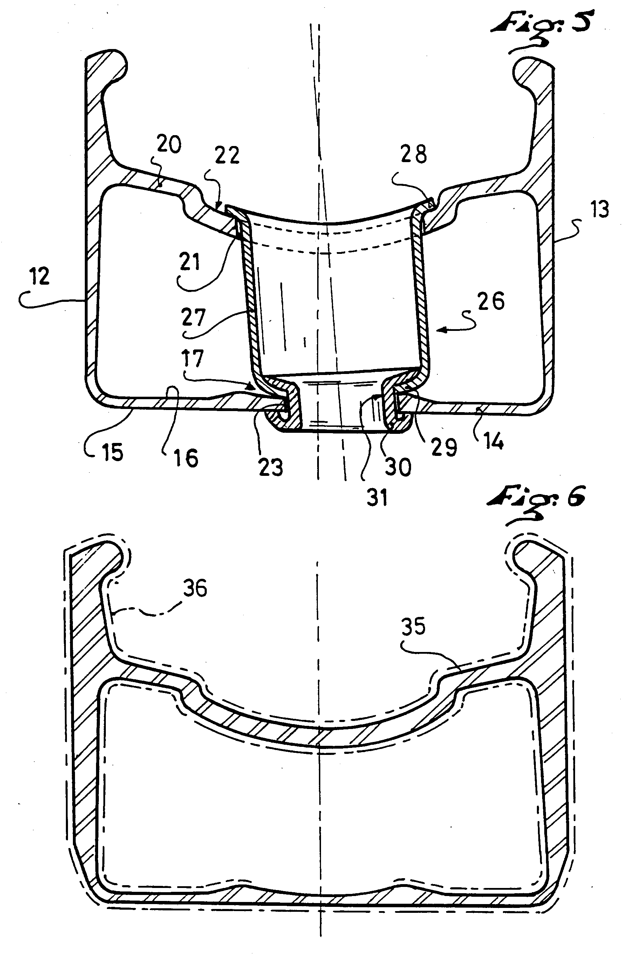

La figure 4 représente une variante de réalisation. Selon cette variante, le pont inférieur 14 est globalement plat et perpendiculaire aux deux ailes 12 et 13. Sa face externe 15 est rectiligne en section transversale. Sa face interne 16 est cependant ondulée, et présente une cuvette annulaire 17 prévue pour recevoir les oeillets de rayon. Ceci sera décrit ultérieurement. L'épaisseur du pont inférieur est ici variable, mais elle reste globalement inférieure à 0,7 millimètres. Il se peut toutefois que sur les deux bords latéraux de la cuvette, l'épaisseur du pont inférieur soit localement supérieure à 0,7 mm, de façon à obtenir la forme désirée pour la cuvette centrale 17. Quoi qu'il en soit, l'épaisseur du pont inférieur 14 est inférieure à 0,7 mm sur la majeure partie de sa largeur. Cette épaisseur peut même être de l'ordre de 0,5 mm.

La figure 5 représente en section la même jante au niveau d'un oeillet prévu pour supporter un rayon.

Le pont supérieur 20 est percé d'un orifice 21 situé dans la partie médiane de sa cuvette 22. Le pont inférieur 14 est lui aussi percé d'un orifice 23 de plus petites dimensions situé dans la partie centrale de la cuvette 17. De préférence, les oeillets utilisés avec la présente jante sont du type double, c'est-à-dire que chaque oeillet traverse le caisson 25 et prend appui sur chacun des ponts 14 et 20. Ainsi, les oeillets créent à intervalles réguliers des liaisons mécaniques entre les deux ponts de la jante, ce qui contribue à sa rigidité.

En se référant à la figure 5, l'oeillet 26 présente un corps 27 de forme globale cylindrique qui présente à sa partie supérieure une collerette 28. La collerette est prévue pour se loger dans la cuvette 22 du pont supérieur.

Le corps présente vers le bas par un col plus étroit 29 qui traverse l'orifice 23 du pont inférieur. En se refermant, le corps 27 donne naissance à un épaulement qui est prévu pour reposer contre la face interne 16 du pont inférieur 14, dans la cuvette 17 dans l'axe de l'orifice 23. Le corps 27 est solidarisé au pont inférieur 14 au niveau de son col 29 par un anneau de sertissage 30 dont la paroi est déformée de façon à pincer ensemble la partie inférieure du corps 27 et le pont inférieur 14.

L'anneau de sertissage 30 présente dans sa partie centrale un orifice 31 dans lequel est enfilé le rayon avec son écrou.

De façon connue, le rayon appuie par son écrou contre la base de l'oeillet. Le pont inférieur 14 est sollicité par les contraintes de traction du rayon, mais le corps de l'oeillet renvoie vers le pont supérieur une partie de ces contraintes.

Ce type d'oeillet est particulièrement avantageux dans le cas présent, car les contraintes du rayon sont reprises conjointement par les deux ponts. Par les liaisons créées par les oeillets, le pont supérieur soulage le pont inférieur d'une grande partie de ces contraintes. Ces liaisons compensent la faible épaisseur du pont inférieur.

Les cuvettes 17 et 22 des deux ponts sont incurvées. La courbure est prévue pour pouvoir placer l'oeillet en alignement avec l'orientation de l'écrou du rayon. Une des techniques pour la pose des rayons consiste en effet à percer la jante selon deux orientations légèrement décalées angulairement, chacune des orientations correspondant à l'orientation générale des rayons d'une des nappes de rayons. Les oeillets sont posés dans l'alignement de chacune de ces deux orientations. La figure 5 montre un oeillet posé selon l'une de ces orientations. Selon une autre technique de pose des oeillets, la jante est percée d'orifices orientés de façon radiale, les oeillets sont posés dans les orifices selon cett orientation radiale. Chaque anneau de sertissage présente un orifice central élargi pour permettre à l'écrou du rayon de se désaxer afin de prendre l'orientation du rayon qu'il retient.

Ce mode de montage des oeillets n'est cependant pas essentiel pour l'invention, et d'autres types d'oeillets pourraient convenir, notamment des oeillets simples. D'autres modes de montage des rayons pourraient également convenir, par exemple on pourrait ajouter une rondelle au niveau de l'écrou pour augmenter la surface de portée de l'écrou sur l'un des ponts.

La jante est réalisée en tout matériau approprié, par exemple en alliage d'aluminium, de titane ou autre matériau qui offre un bon compromis entre le poids et la résistance.

Dans le cas où la jante est réalisée à partir d'un profilé en alliage d'aluminium, on sait qu'il est difficile de réaliser un profilé de faible épaisseur par extrusion, et d'en assembler les deux extrémités. En effet, pour l'assemblage, les deux extrémités sont relativement fragiles.

L'invention propose donc de réaliser a jante à partir d'un segment de profilé dont la section présente une épaisseur plus forte, c'est-à-dire une épaisseur qui peut être obtenue sans difficulté particulière par extrusion. Ensuite, au cours de la fabrication de la jante, l'épaisseur du profilé est réduite de façon à donner en final la forme désirée en section.

Pour illustrer cela, la figure 6 représente en section deux profilés de jante imbriqués l'un dans l'autre. Le profil intérieur, dessiné en trait fort 35 est la section du profilé que l'on désire obtenir en final. Le profil extérieur, dessiné en trait pointillé 36 est la section de la barre brute dont un segment est coupé puis cintré puis assemblé bout à bout pour former la jante. Le profil brut présente une épaisseur plus importante que le profil final. Cette épaisseur est globalement égale ou supérieure à l'épaisseur d'un profilé traditionnel. Son extrusion ne pose pas de problème particulier, au moins en ce qui concerne la vitesse d'extrusion. L'assemblage bout à bout est réalisé par un manchon, ou bien il peut être réalisé par une technique de soudage. Comme l'épaisseur du profilé est voisine d'une épaisseur traditionnelle, l'assemblage ne pose pas non plus de problème particulier.

La jante est ensuite usinée pour amener son épaisseur aux dimensions voulues. On peut utiliser une technique d'usinage chimique qui consiste à plonger la jante dans un bain chimique qui attaque la matière de la jante par dissolution de façon uniforme. Cette attaque se produit au niveau de toutes les surfaces de la jante, y compris sur l'intérieur du caisson. En effet, les orifices pour les oeillets qui ont été réalisés en principe après l'assemblage bout à bout permettent au produit chimique de pénétrer à l'intérieur du caisson.

Pour le profilé de jante représenté dans la figure 6, l'attaque chimique a pour effet de dissoudre l'épaisseur de matière comprise entre le trait fort 36 et le trait fin 35.

Ensuite le jante peut subir des opérations de finitions telles que usinage des flancs pour former des surfaces de freinage conformément à ce qui est décrit dans la demande de brevet publiée sous le numéro FR 2 693 672, anodisation, pose des oeillets.

Selon une autre technique, le profilé brut est réduit en épaisseur par un usinage mécanique, par exemple fraisage ou tournage. Cet usinage ne peut cependant être réalisé que sur les faces externes, c'est-à-dire sur les faces externes des ailes, et la face externe du pont inférieur. Le pont supérieur ne peut pas à priori être usiné. Ceci n'est pas réellement gênant, dans la mesure où ce pont est relativement épais. La barre brute peut donc être extrudée avec un pont supérieur ayant l'épaisseur finale désirée.

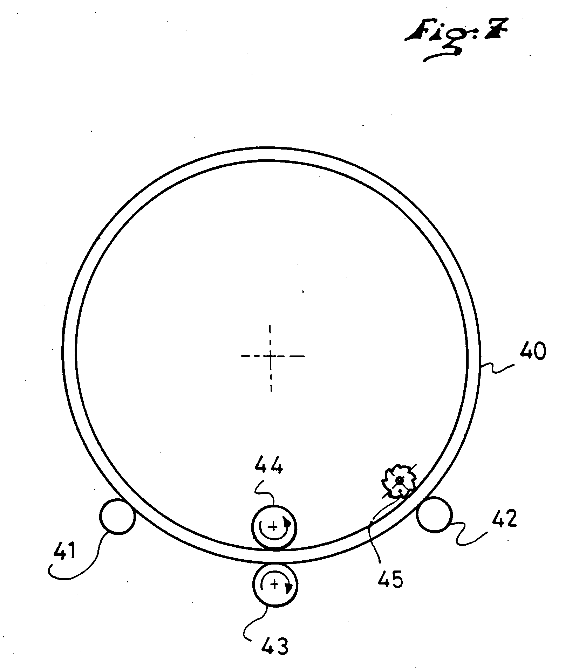

La figure 7 illustre une technique d'usinage mécanique du pont inférieur de la jante.

La jante 40 repose sur deux galets d'appui 41 et 42. Elle est entraînée par ailleurs par deux galets d'entraînement 43 et 44 placés en regard l'un de l'autre, la jante passant entre ces deux galets. Les deux galets 43 et 44 sont entraînés à des vitesses synchrones. Ils sont par exemple situés entre les deux galets d'appui.

Une fraise 45 ou un autre outil d'usinage, par exemple une meule, est placée à l'intérieur de la jante, en regard de l'un des galets d'appui par exemple le galet 42, en étant orientée parallèlement au galet. La fraise est entraînée en rotation. Elle usine la face externe du pont inférieur en pressant la jante contre le galet 42. De cette façon, la cote d'unsinage est relativement précise. En effet, elle est prise en référence à la hauteur de la jante, indépendamment du rayon de courbure général de celle-ci. On sait en effet que tant que la jante n'est pas équipée de son moyeu et de ses rayons, son rayon de courbure n'est pas parfaitement constant, la jante peut être ovalisée globalement ou localement.

Avantageusement, l'épaisseur initiale du pont inférieur peut être mesurée au niveau des orifices prévus pour les oeillets. L'épaisseur après usinage peut être controlée aussi au niveau de ces orifices.

Dans le cas où les flancs latéraux de la jante sont aussi usinés, conformément à ce qui est décrit dans la demande de brevet français publiée sous le numéro 2 693 672, les deux opérations d'usinage du pont inférieur et des flancs latéraux peuvent être combinées sur le même support de la jante qui est représenté schématiquement en figure 7.

## Revendications

1. Jante de roue pour cycle, prévue pour recevoir un pneu, présentant en section transversale deux ailes latérales (2, 3, 12, 13) formant les deux flancs latéraux de la jante, réunies à leur base par un pont inférieur (4, 14) et dans leur partie médiane par un pont supérieur (5), de façon à produire vers le sommet des ailes une rainure annulaire prévue pour recevoir le pneu
caractérisée par le fait qu'elle présente en section une forme globale rectangulaire, et que le pont inférieur (4, 14) présente une épaisseur inférieure à 0,7 millimètres sur au moins la plus grande partie de sa largeur.

2. Jante selon la revendication 1, caractérisée par le fait que chaque aile (2, 3, 12, 13) présente une épaisseur globalement croissante depuis sa jonction avec le pont inférieur (4, 14) jusqu'à sa jonction avec le pont supérieur (5).

3. Jante selon la revendication 2, caractérisée par le fait que chaque aile (2, 3, 12, 13) présente une épaisseur décroissante en direction de son sommet depuis la jonction avec le pont supérieur (5).

4. Jante selon la revendication 1, caractérisé par le fait que le pont inférieur (4, 14) présente une face externe sensiblement cylindrique de révolution et perpendiculaire au plan de symétrie.

5. Jante selon la revendication 1, caractérisée par le fait que le pont inférieur (4) présente une face interne sensiblement cylindrique de révolution.

6. Jante selon la revendication 1, caractérisée par le fait que le pont inférieur (14) présente une face interne (16) ondulée de façon à former une cuvette annulaire (17) au niveau du plan de symétrie médian.

7. Jante selon la revendication 1, caractérisée par le fait que ses faces latérales sont dressées par usinage.

8. Jante selon la revendication 1, caractérisée par le fait que la face externe du pont inférieur est dressée par usinage au moyen d'une fraise qui presse localement la jante contre un galet de support.

9. Jante selon l'une quelconque des revendications précédentes, équipée d'au moins un oeillet (26) pour le montage d'au moins un rayon, caractérisée par le fait que l'oeillet s'étend entre le pont inférieur et le pont supérieur, qu'il présente un premier épaulement d'appui (28) à la surface externe du pont supérieur (20), et un second épaulement d'appui (19) à la surface interne (16) du pont inférieur (14).

10. Roue pour cycle, caractérisée par le fait qu'elle présente une jante selon l'une quelconque des revendications précédentes.

## Claims

1. Rim of a wheel for a cycle, provided to receive a tire, having two lateral wings (2, 3, 12, 13) in transverse cross-section forming the two lateral sides of the rim, joined at their base by a lower bridge (4, 14) and in their median part by an upper bridge (5), so as to produce towards the top of the wings an annular groove provided to receive the tire,
characterized in that it has in cross-section a generally rectangular shape, and that the lower bridge (4, 14) has a thickness less than 0.7 millimeters over at least the largest part of its width.

2. Rim according to claim 1, characterized in that each wing (2, 3, 12, 13) has a generally increasing thickness, from its junction with the lower bridge (4, 14) to its junction with the upper bridge (5).

3. Rim according to claim 2, characterized in that each wing (2, 3, 12, 13) has a decreasing thickness towards its top from the junction with the upper bridge (5).

4. Rim according to claim 1, characterized in that the lower bridge (4, 14) has a substantially cylindrical external surface of revolution and perpendicular to the plane of symmetry.

5. Rim according to claim 1, characterized in that the lower bridge (4) has a substantially cylindrical internal surface of revolution.

6. Rim according to claim 1, characterized in that the lower bridge (14) has a corrugated internal surface (16) so as to form an annular seat (17) at the level of the median plane of symmetry.

7. Rim according to claim 1, characterized in that its lateral surfaces are trimmed by machining.

8. Rim according to claim 1, characterized in that the external surface of the lower bridge is trimmed by machining by means of a milling cutter pressing the rim locally against a support roller.

9. Rim according to any of the preceding claims, equipped with at least one eyelet (26) for the mounting of at least one spoke, characterized in that the eyelet extends between the lower bridge and the upper bridge, that it has a first support shoulder (28) at the external surface of the upper bridge (20), and a second support shoulder (19) at the internal surface (16) of the lower bridge (14).

10. Wheel for a cycle, characterized in that it has a rim according to any of the preceding claims.

## Patentansprüche

1. Radfelge für ein Fahrrad, die vorgesehen ist, um einen Reifen aufzunehmen, die im Querschnitt zwei seitliche Schenkel (2, 3, 12, 13) aufweist, die die zwei seitlichen Flanken der Felge bilden, an ihrer Basis durch einen unteren Steg (4, 14) und in ihrem mittleren Bereich durch einen oberen Steg (5) verbunden sind, derart, daß zum Scheitel der Schenkel hin eine ringförmige Nut gebildet wird, die vorgesehen ist, um den Reifen aufzunehmen,
dadurch gekennzeichnet, daß sie im Querschnitt eine im ganzen rechteckige Form aufweist und daß der untere Steg (4, 14) eine geringere Dicke als 0,7 mm auf wenigstens dem größeren Teil seiner Breite aufweist.

2. Felge nach Anspruch 1, dadurch gekennzeichnet, daß jeder Schenkel (2, 3, 12, 13) eine von seiner Verbindung mit dem unteren Steg (4, 14) bis zu seiner Verbindung mit dem oberen Steg (5) im ganzen zunehmende Dicke aufweist.

3. Felge nach Anspruch 2, dadurch gekennzeichnet, daß jeder Schenkel (2, 3, 12, 13) eine von der Verbindung mit dem oberen Steg (5) in Richtung seines Scheitels abnehmende Dicke aufweist.

4. Felge nach Anspruch 1, dadurch gekennzeichnet, daß der untere Steg (4, 14) eine im wesentlichen zylindrische, rotationssymmetrische und zur Symmetrieebene senkrechte Außenseite aufweist.

5. Felge nach Anspruch 1, dadurch gekennzeichnet, daß der untere Steg (4) eine im wesentlichen rotationssymmetrische, zylindrische Innenfläche aufweist.

6. Felge nach Anspruch 1, dadurch gekennzeichnet, daß der untere Steg (14) eine Innenfläche (16) aufweist, die gewellt ist, um eine ringförmige Rille (17) auf dem Niveau der mittleren Symmetrieebene bilden.

7. Felge nach Anspruch 1, dadurch gekennzeichnet, daß ihre Seitenflanken spanend zugerichtet sind.

8. Felge nach Anspruch 1, dadurch gekennzeichnet, daß die Außenseite des unteren Stegs mit Hilfe einer Fräse spanend zugerichtet ist, die die Felge lokal gegen eine Stützrolle preßt.

9. Felge nach einem der vorhergehenden Ansprüche, versehen mit wenigstens einer Öse (26) für die Montage wenigstens einer Speiche, dadurch gekennzeichnet, daß die Öse sich zwischen dem unteren Steg und dem oberen Steg erstreckt, daß sie eine erste Auflageschulter (28) an der Außenoberfläche des oberen Stegs (20) und eine zweite Auflageschulter (19) an der Innenoberfläche (16) des unteren Stegs (14) aufweist.

10. Rad für ein Fahrrad, dadurch gekennzeichnet, daß es eine Felge nach einem beliebigen der vorhergehenden Ansprüche umfaßt.
